# EUROPÄISCHE PATENTSCHRIFT

(11) **EP 2 942 686 B1**
(45) Veröffentlichungstag und Bekanntmachung des Hinweises auf die Patenterteilung: **17.10.2018**
(21) Anmeldenummer: 15168392.7
(22) Anmeldetag: 11.02.2014
(51) Int. Cl.: G05B 19/418, G05B 19/048, H04L 12/40

(54) **STEUERUNGS- UND DATENÜBERTRAGUNGSSYSTEM ZUM ÜBERTRAGEN VON SICHERHEITSBEZOGENEN DATEN ÜBER EIN KOMMUNIKATIONSMEDIUM**
CONTROL AND DATA TRANSMISSION SYSTEM FOR TRANSMISSION OF SAFETY-RELATED DATA VIA A COMMUNICATION MEDIUM
SYSTÈME DE COMMANDE ET DE TRANSMISSION DE DONNÉES POUR LA TRANSMISSION DE DONNÉES LIÉES À LA SÉCURITÉ PAR L'INTERMÉDIAIRE D'UN SUPPORT DE COMMUNICATION

(30) Priorität: 13.02.2013 DE 102013101413
(43) Veröffentlichungstag der Anmeldung: 11.11.2015
(62) Teilanmeldung aus: 14154711.7
(73) Patentinhaber: PHOENIX CONTACT GmbH & Co. KG, 32825 Blomberg (DE)
(72) Erfinder: Meyer-Gräfe, Karsten, 33758 Schloß Holte-Stukenbrock (DE)
(74) Vertreter: Blumbach · Zinngrebe Patent- und Rechtsanwälte

(56) Entgegenhaltungen:
- EP-A1- 1 887 444
- DE-A1- 19 939 567
- DE-A1-102011 005 239

## Beschreibung

Die vorliegende Erfindung betrifft ein Steuerungs- und Datenübertragungssystem zum Übertragen von sicherheitsbezogenen Daten über ein Kommunikationsmedium.

In der Automatisierungstechnik ist es häufig notwendig, Sicherheitsfunktionen oder sicherheitskritische Prozesse zum Schutz von Mensch, Maschine oder Umwelt zu implementieren, mit denen zum Beispiel eine Maschine nach Öffnen einer Schutztür oder Betätigung eines Not-Aus-Schalters abgeschaltet oder in einen sichern Zustand gefahren werden kann. Dafür werden konventionelle Sicherheitskonzepte zunehmend durch in fehlersicheren Automatisierungssystemen eingebettete Sicherheitsfunktionen ersetzt. Diese Systeme umfassen dezentral am Netzwerk eines Automatisierungs-Bussystems, d.h. an einem Feldbussystem, angeschaltete fehlersichere Teilnehmer, wobei in den Teilnehmern in der Regel sowohl die eigentlichen Sicherheitsfunktionen, als auch die Fehler erkennenden und Fehler beherrschenden Maßnahmen realisiert sein können.

In derzeitigen automatisierten Anlagen werden abhängig vom Automatisierungsgrad und von der Ausdehnung der Anlagen Kommunikationssysteme verwendet, die dezentrale Eingabe-/Ausgabe-Geräte (E/A-Geräte) und Steuerungen verbinden. Die E/A-Geräte und Steuerungen können sowohl Standardteilnehmer als auch Teilnehmer mit Sicherheitsfunktionen sein. Für den Transport von sicherheitsbezogenen Daten über gemeinsame Kommunikationssysteme ist bekannt, das Netzwerk durch sichere Netzwerkprotokolle zu unterstützen. Die Steuerung von Standardfunktionen und von Sicherheitsfunktionen kann über ein gemeinsames Netzwerk sowohl durch eine zentrale Struktur mit einer Standard- und Sicherheitssteuerung realisiert werden, als auch durch dezentrale Steuerungs- und Sicherheitslogiken, die im Netzwerk eines Kommunikations- bzw. Feldbussystems verteilt sind und unabhängig voneinander sicherheitskritische Prozesse steuern.

Ein Steuerungssystem zum Steuern von sicherheitskritischen Prozessen mit wenigstens einer dezentralen, von einer Standardsteuerung abgesetzten sicheren Steuerungseinrichtung ist beispielsweise aus der EP 1 188 096 B1 bekannt. Bei dem bekannten Steuerungssystem ist die dezentral angeordnete sichere Steuerungseinrichtung ausschließlich für die Steuerung des ihr zugewiesenen sicherheitskritischen Prozesses zuständig. Das bedeutet, dass sie den sicherheitskritischen Prozess unabhängig von anderen Steuerungen, insbesondere unabhängig von einer Standardsteuerung steuert.

Dieses bekannte Steuerungssystem hat den Nachteil, dass dezentrale Sicherheitsinseln, das sind dezentrale sicherheitskritische Prozesse, nicht auf einfache und schnelle Weise angesteuert werden können, wie das manche Anwendungen verlangen.

Ferner ist in den letzten Jahren ein Steuersystem unter der Bezeichnung "Safety-Bridge" auf den Markt gekommen, welches eine Dezentralisierung der Verarbeitung sicherheitsrelevanter Prozesse ermöglicht, ohne dass dazu eine explizite Sicherheitssteuerung notwendig wäre. Eine Sicherheitseingangsbaugruppe erzeugt dabei ein sicherheitsrelevantes Signal, in welchem ein Sicherheitsdatum, beispielsweise eine Statusinformation von sicheren Sensoren, an eine zentrale Steuerung übertragen wird. Die zentrale Steuerung kopiert lediglich die empfangenen sicherheitsbezogenen Daten zu einem vorbestimmten sicheren Ausgangsmodul. Das Ausgangsmodul entpackt die sicherheitsbezogenen Daten und nimmt die sicherheitsrelevante Auswertung der Daten vor. Darüber hinaus kann das sichere Ausgangsmodul seinerseits Daten über die zentrale Steuerung an andere dezentrale Teilnehmer versenden, sodass eine Kaskadierung von Sicherheitsprozessen ermöglicht wird. Neben den reinen sicheren Prozessdaten kann das bekannte Steuersystem auch redundante Daten übertragen, die zur Absicherung der Übertragung der sicherheitsbezogenen Daten dienen. Die Safety-Bridge ist beispielsweise in dem Dokument XCP55426671 beschrieben.

In der EP 1 887 444 A1 wird ein Prozesssteuersystem beschrieben, bei dem ein Sicherheitssensor lokale Sicherheitssignale zu einer übergeordneten Sicherheits-SPS und einem Logikmodul einer dezentralen Steuereinheit überträgt. Die dezentrale Steuereinheit weist unter anderem ein Schnellschaltmodul auf, um eine schnelle Zustandsänderung an einer zu steuernden Prozesseinrichtung zu bewirken. Die vom Sicherheitssensor gelieferten Sicherheitssignale werden mit Prozesssignalen in der übergeordneten Sicherheits-SPS logisch verknüpft und als Steuersignale der Steuereinheit und damit dem Schnellschaltmodul zur Ausführung einer Schnellabschaltung zugeführt.

Aus der DE 10 2011 005 239 A1 ist ein Sicherheitssystem mit einem Koppler bekannt, der zwei verschiedene Datenbusse koppelt, so dass über den Koppler ein sicherheitsgerichteter Datenaustausch zwischen den beiden Datenbussen erfolgen kann.

In der DE 199 39 567 A1 wird eine Vorrichtung zum Steuern von sicherheitskritischen Prozessen beschrieben, bei der eine sichere Steuerungseinrichtung und sichere Signaleinheiten an einen gemeinsamen Feldbus angeschlossen sind. Die sicheren Signaleinheiten sind dazu ausgebildet, bei Empfang eines Fehlertelegramms eigenständig den sicherheitskritischen Prozess in einen sicheren Zustand zu überführen.

Der Erfindung liegt die Aufgabe zugrunde, ein Steuerungs- und Datenübertragungssystem zu schaffen, welches in der Lage ist, sicherheitskritische Prozesse oder Teilprozesse in einfacher und schneller Weise zu steuern. Eine weitere Aufgabe der Erfindung ist darin zu sehen, einzelne sicherheitskritische Prozesse oder mehrere sicherheitskritische Prozesse in Form von Gruppen in einem einzigen Kommunikationszyklus und über einen einzigen Befehl schnell abschalten zu können.

Ein Kerngedanke der Erfindung kann darin gesehen werden, mit Hilfe einer zentralen Einrichtung, wie zum Beispiel einer zentralen Steuerungseinrichtung einen Schnellabschaltmodus auszulösen, um eine oder mehrere Sicherheitsinseln, d. h. dezentrale sicherheitskritische Prozesse oder Teilprozesse abschalten zu können.

Die oben genannte technische Aufgabe kann durch die Merkmale des Anspruchs 1 gelöst werden.

Danach kann ein Steuerungs- und Datenübertragungssystem insbesondere zum Übertragen von sicherheitsbezogenen Daten über einen Feldbus und zum Steuern sicherheitskritischer Prozesse vorgesehen sein.

Das Steuerungs- und Datenübertragungssystem kann eine erste, sichere Steuereinrichtung zum Steuern eines sicherheitskritischen Prozesses aufweisen. Angemerkt sei, dass ein solcher sicherheitskritischer Prozess auch als Sicherheitsinsel bezeichnet werden kann.

Weiterhin kann das Steuerungs- und Datenübertragungssystem wenigstens eine Signaleinheit aufweisen, die der ersten sicheren Steuereinrichtung zugeordnet und über E/A-Kanäle mit dem sicherheitskritischen Prozess verknüpft ist. Bei der Signaleinheit kann es sich um ein Eingabe-/Ausgabegerät, auch als E/A- oder I/O-Gerät bekannt, handeln. Eine solche Signaleinheit ist beispielsweise in der Lage, Eingangsdaten von Sensoren zu empfangen und an eine überlagerte Steuerung weiterzuleiten sowie Ausgangsdaten an Aktoren zu übertragen, die den sicherheitskritischen Prozess steuern. Das Steuerungs- und Datenübertragungssystem kann einen Feldbus aufweisen, über den die erste Steuereinheit und die wenigstens eine Signaleinheit verbunden sind. Weiterhin kann eine überlagerte Steuereinrichtung zum Steuern der Kommunikation auf dem Feldbus und zum Steuern sicherheitsunkritischer Prozesse vorgesehen sein. Die überlagerte Steuereinrichtung kann hierzu einen standardisierten Busmaster aufweisen. Die wenigstens eine Signaleinheit und die erste Steuereinrichtung können jeweils sicherheitsbezogene Einrichtungen aufweisen, um eine fehlersichere Kommunikation zu gewährleisten. Die überlagerte Steuereinrichtung ist getrennt von der ersten Steuereinrichtung und der wenigstens einen Signaleinheit an den Feldbus angeschlossen.

Die erste, sichere Steuereinrichtung kann dazu ausgebildet sein, erste sicherheitsbezogene Daten und zweite sicherheitsbezogene Daten bereitzustellen und diese Daten zur überlagerten Steuereinrichtung zu übertragen. Die überlagerte Steuereinrichtung kann ferner dazu ausgebildet sein, die zweiten sicherheitsbezogenen Daten auszuwerten, zu verändern und zur ersten Steuereinrichtung und/oder zu der wenigstens einen Signaleinheit zu übertragen, um den sicherheitskritischen Prozess, der mit der wenigstens einen Signaleinheit verknüpft ist, zentral steuern zu können.

Angemerkt sei, dass die ersten sicherheitsbezogenen Daten vorzugsweise von der ersten sicheren Steuereinrichtung und/oder der wenigstens einen Signaleinheit dazu verwendet werden, den sicherheitskritischen Prozess unabhängig von anderen Steuereinrichtungen, insbesondere unabhängig von der überlagerten Steuereinrichtung zu steuern.

Um einen komplexe Prozess steuern zu können, kann das Steuerungs- und Datenübertragungssystem zumindest eine weitere sichere Steuereinrichtung zum Steuern eines weiteren sicherheitskritischen Prozesses und wenigstens eine weitere Signaleinheit, die über E/A-Kanäle mit dem weiteren sicherheitskritischen Prozess verknüpft ist, aufweisen.

Bei der weiteren Signaleinheit kann es sich wiederum um ein Eingabe-/Ausgabegerät, auch als E/A- oder I/O-Gerät bekannt, handeln. Die weitere Signaleinheit ist beispielsweise in der Lage, Eingangsdaten von Sensoren zu empfangen und an die überlagerte Steuerung weiterzuleiten sowie Ausgangsdaten an Aktoren zu übertragen, die den weiteren sicherheitskritischen Prozess steuern. Die zweite Steuereinheit und die wenigstens eine weitere Signaleinheit sind an den Feldbus angeschlossen. Die wenigstens eine weitere Signaleinheit und die zweite Steuereinrichtung können jeweils sicherheitsbezogene Einrichtungen aufweisen, um eine fehlersichere Kommunikation zu gewährleisten. Die überlagerte Steuereinrichtung ist getrennt von der zweiten Steuereinrichtung und der wenigstens einen weiteren Signaleinheit an den Feldbus angeschlossen.

Die weiter sichere Steuerungseinrichtung kann dazu ausgebildet sein, erste sicherheitsbezogene Daten und zweite sicherheitsbezogene Daten bereitzustellen und die zweiten sicherheitsbezogenen Daten zur überlagerten Steuereinrichtung zu übertragen. Die überlagerte Steuereinrichtung kann in diesem Fall dazu ausgebildet sein, die von der zweiten Steuereinrichtung empfangenen zweiten sicherheitsbezogenen Daten auszuwerten, zu verändern und zur zweiten Steuereinrichtung und/oder zu der wenigstens einen weiteren Signaleinheit zu übertragen, um den weiteren sicherheitskritischen Prozess zentral steuern zu können.

Vorzugsweise kann die überlagerte Steuerungseinrichtung nur die zweiten sicherheitsbezogenen Daten auswerten und verarbeiten, während sie die ersten sicherheitsbezogenen Daten lediglich transparent zur ersten und/oder zweiten Steuereinrichtung weiterleitet.

Dank der Verwendung zweiter sicherheitsbezogener Daten, die vorzugsweise in jedem Kommunikationszyklus zur überlagerten Steuereinrichtung übertragen und dort ausgewertet sowie verarbeitet werden können, kann eine überlagerte, zentrale und sichere Steuerung durchgeführt werden, sodass dezentrale, sicherheitskritischen Prozesse, die gemäß dem EP 1 188 096 B1 nur unabhängig und dezentral voneinander gesteuert werden können, nunmehr auch zentral gesteuert werden können.

Damit ist das Steuerungs- und Datenübertragungssystem auch für Anwendungen geeignet, die eine schnelle Ansteuerung einer einzelnen Sicherheitsinsel oder von mehreren Sicherheitsinseln verlangen. Insbesondere können mittels der zweiten sicherheitsbezogenen Daten sicherheitskritische Prozesse schnell und zentral abgeschaltet werden.

Hierzu enthalten die zweiten sicherheitsbezogenen Daten einen Befehl zur schnell Abschaltung des sicherheitsgerichteten Prozesses oder der sicherheitsgerichteten Prozesse.

Tritt in dem Steuerungs- und Datenübertragungssystem kein Fehler auf oder ist keine Sicherheitsfunktion ausgelöst worden, darf es auch nicht zu einer Schnellabschaltung der sicherheitsgerichteten Prozesse kommen. Um dies sicherzustellen, ist die überlagerte Steuereinrichtung dazu ausgebildet, die zweiten sicherheitsbezogenen Daten gezielt derart zu verändern, dass keine unerwünschte Schnellabschaltung des sicherheitskritischen Prozesses und/oder des weiteren sicherheitskritischen Prozesses erfolgt.

Hierzu kann vorgesehen sein, dass vorzugsweise jede Signaleinheit und/oder jede sichere Steuerungseinrichtung, die auch als sichere Datenquelle oder sicherer Eingang fungieren können, als zweite sicherheitsbezogene Daten eine logische Null zur überlagerten Steuereinrichtung übertragen, die dann aktiv die logische Null durch eine logische Eins ersetzt, wenn kein Fehler aufgetreten oder kein sicherheitskritischer Prozess ausgelöst worden ist. In diesem Fall greift die überlagerte Steuereinrichtung in Übereinstimmung mit dem Ruhestromprinzip zwingend in die Steuerung der sicherheitskritischen Prozesse ein.

Werden hingegen die zweiten sicherheitsbezogenen Daten in Form einer logischen Null nicht von der überlagerten Steuereinrichtung gezielt geändert, so würde eine logische Null zu einem sicheren Ausgang übertragen werden. Dies würde bewirken, dass die dem sicheren Ausgang zugeordnete Sicherheitsfunktion oder der dem sicheren Ausgang zugeordnete sicherheitskritische Prozess in den sicheren Zustand überginge. Dieses Verfahren wird als Ruhestromprinzip bezeichnet.

Die zweiten sicherheitsbezogenen Daten können ein einziges Informationsbit enthalten, welches in der überlagerten Steuereinrichtung gezielt verändert wird.

Damit die sicheren Steuerungseinrichtungen und/oder die Signaleinheiten erkennen können, dass die zweiten sicherheitsbezogenen Daten von der überlagerten Steuereinrichtung kommen und korrekt weitergeleitet worden sind, kann die überlagerte Steuereinrichtung dazu ausgebildet sein, dynamische Daten zu erzeugen und zur ersten und/oder zur zweiten Steuereinrichtung und/oder zu den Signaleinheiten zu übertragen. Die erste und/oder die zweite Steuereinrichtung und/oder die Signaleinheiten können dazu ausgebildet sein, die dynamischen Daten auszuwerten. Bei den dynamischen Daten kann es sich um toggelnde Informationen oder um eine laufende Nummer handeln.

Alternativ können die erste und/oder zweite Steuereinrichtungen und/oder die Signaleinheiten dazu ausgebildet sein, dynamische Daten zu erzeugen und zur überlagerten Steuereinrichtung zu übertragen. Die überlagerte Steuereinrichtung kann dann dazu ausgebildet sein, die empfangenen dynamischen Daten gezielt zu verändern und zu der ersten und/oder zweiten Steuereinrichtung und/oder zu den Signaleinheiten zu übertragen.

Die Signaleinheiten können dazu ausgebildet sein, unter Ansprechen auf undefiniert geänderte dynamische Daten den jeweiligen sicherheitskritischen Prozess sofort abzuschalten oder in einen definierten, sicheren Zustand zu überführen.

Bei dem Feldbus kann es sich beispielsweise um den Interbus handeln. In diesem Fall werden die ersten sicherheitsbezogenen Daten, die zweiten sicherheitsbezogenen Daten und gegebenenfalls die dynamischen Daten zyklisch in sogenannten Summenrahmen über den Feldbus übertragen. Die Interbus-basierte Kommunikation ist dem Fachmann hinlänglich bekannt und bedarf somit keiner weiteren Erläuterung.

Ferner ist ein Steuerungs- und Datenübertragungssystem zum Steuern von sicherheitskritischen Prozessen vorgesehen, welches wenigstens zwei sichere Steuereinrichtungen zum Steuern jeweils eines sicherheitsgerichteten Prozesses aufweisen kann. Den beiden sicheren Steuereinrichtungen ist jeweils wenigstens eine Signaleinheit zugeordnet, die über E/A-Kanäle mit dem jeweiligen sicherheitskritischen Prozess verknüpft sind. Weiterhin kann ein Feldbus vorgesehen sein, über den die wenigstens zwei Steuereinrichtung und die Signaleinheiten verbunden sind. Eine überlagerte Steuereinrichtung kann vorgesehen sein, die zum Steuern der Kommunikation auf dem Feldbus und zum Steuern sicherheitsunkritischer Prozesse ausgebildet sein kann. Die sicheren Steuereinrichtungen und die Signaleinheiten können jeweils sicherheitsbezogene Einrichtungen aufweisen, um eine fehlersichere Kommunikation zu gewährleisten. Die überlagerte Steuereinrichtung ist vorzugsweise getrennt von den sicheren Steuereinrichtungen und den Signaleinheiten an den Feldbus angeschlossen. Die überlagerte Steuereinrichtung kann dazu ausgebildet sein, ein Broadcast-Telegramm zu erzeugen, welches Steuerinformationen, insbesondere eine Schnellabschaltinformation enthält. Die überlagerte Steuereinrichtung kann ferner dazu ausgebildet sein, das Broadcast-Telegramm zu den wenigstens zwei Steuereinrichtungen und/oder zu den Signaleinheiten zu übertragen, um die jeweiligen sicherheitskritischen Prozesses zentral steuern zu können.

Angemerkt sei, dass die oben erläuterten Merkmale und alle folgenden Merkmale in beliebiger Kombination oder auch jeweils für sich allein verwendet werden können, ohne den Rahmen der Erfindung zu verlassen.

Die Erfindung wird nachfolgend anhand mehrerer Ausführungsbeispiels in Verbindung mit den beiliegenden Zeichnungen näher erläutert. Es zeigen:
- Fig. 1: ein beispielhaftes Automatisierungssystem, in welchem die Erfindung verwirklicht ist,
- Fig. 2: einen beispielhaften Summenrahmen gemäß der Erfindung,

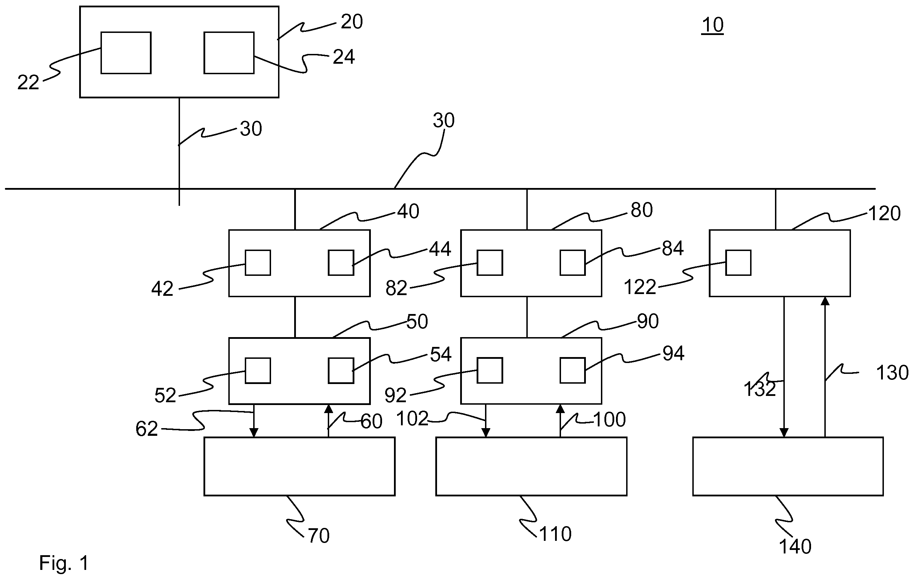

Fig. 1 zeigt ein beispielhaftes Automatisierungssystem in Form eines Steuerungs- und Datenübertragungssystems 10, welches unter Anderem zum Steuern von sicherheitskritischen Prozessen und zum Steuern sicherheitsunkritischer Prozesse ausgebildet ist. Das Automatisierungssystem 10 wird beispielhaft anhand des Interbus-Systems erläutert, wobei auch andere Feldbussysteme eingesetzt werden können. Der Interbus ist hinlänglich bekannt und zum Beispiel in dem Fachbuch A. Baginski et al. INTERBUS Grundlagen und Praxis, 2. bearbeitete Auflage, Hüthig Verlag Heidelberg, 1998 ausführlich beschrieben.

Wie in Fig. 1 gezeigt, ist eine überlagerte Steuereinrichtung 20 beispielsweise zusammen mit einer ersten sicheren Steuereinrichtung 40, einer sicheren Signaleinheit 50, einer zweiten sicheren Steuereinrichtung 80, einer weiteren sicheren Signaleinheit 90 und einem nicht sicheren Busteilnehmer 120 an einen Interbusbasierten Feldbus 30 angeschlossen. Die sichere Steuereinrichtung 40 kann dazu ausgebildet sein, über die Signaleinheit 50 einen sicherheitskritischen Prozess 70 zu überwachen und zu steuern. Die sichere Steuereinrichtung 80 kann dazu ausgebildet sein, über die Signaleinheit 90 einen sicherheitskritischen Prozess 110 zu überwachen und zu steuern. Denkbar ist, dass mehr als zwei sichere Steuereinrichtungen, die jeweils mit mehreren Signaleinheiten verbunden sein können, am Feldbus 30 angeschlossen sind, um sicherheitskritische Prozesse in dezentraler Weise zu steuern.

Die überlagerte Steuereinrichtung 20 kann einen herkömmlichen standardisierten Busmaster 22 aufweisen, der im vorliegenden Beispiel als Interbus-Busmaster ausgebildet ist und die Kommunikation auf dem Feldbus 30 in an sich bekannter Weise steuert. Die überlagerte Steuereinrichtung 20 ist ferner dazu ausgebildet, über den nicht sicheren Busteilnehmer 120 zentral einen nicht sicheren Prozess 140 zu steuern. Der nicht sichere Busteilnehmer 120 ist vorzugesweise ein E/A-Gerät, welches über E/A-Kanäle 130 und 132 mit dem sicherheitsunkritischen Prozess 140 kommunizieren kann. In der Praxis kann das E/A-Gerät 120 über den Kanal 132 mit einem Aktor (nicht dargestellt) und über den Kanal 130 mit einem Sensor (nicht dargestellt) verbunden sein. Der Sensor liefert Zustandsdaten des sicherheitsunkritischen Prozesses 140 über das E/A-Gerät 120 an die überlagerte Steuereinrichtung 20, während das E/A-Gerät 120 die von der überlagerten Steuereinrichtung 20 kommenden Steuerdaten dem Aktor zuführt.

Weiterhin weist die überlagerte Steuereinrichtung 20 eine sicherheitsgerichtete Einrichtung 24 auf, die besondere sicherheitsbezogene Daten, vorzugsweise Schnellabschaltinformationen, von den sicheren Steuereinrichtungen 40 und 80 und/oder von den Signaleinheiten 50 und 90 empfangen, auswerten und, wenn erforderlich, gezielt verändern kann. Die genaue Funktionsweise der sicherheitsgerichteten Einrichtung 24 wird später noch ausführlich beschrieben.

Die erste sichere Steuereinrichtung 40 ist über eine Busschnittstelle 42 an den Feldbus 30 angeschlossen. Die Busschnittstelle 42 kann eine herkömmliche Interbus-basierte Busschnittstelle sein. Weiterhin weist die erste Steuerungseinrichtung 40 eine sicherheitsbezogene Einrichtung 44 auf, die dazu ausgebildet ist, mit einer sicherheitsbezogenen Einrichtung 54 der Signaleinheit 50 in an sich bekannter Weise eine fehlersichere Kommunikation zu gewährleisten. Die Signaleinheit 50 weist wiederum eine Busschnittstelle 52 auf, über welche die Signaleinheit 50 mit der ersten Steuereinrichtung 40, der übergelagerten Steuereinrichtung 20 und den übrigen Busteilnehmern kommunizieren kann.

Die erste Steuerungseinrichtung 40 kann dazu ausgebildet sein, über den Feldbus 30 erste sicherheitsbezogene Daten für die Signaleinheit 50 bereitzustellen, um den sicherheitskritischen Prozess 70 zu steuern. Die sichere Steuerungseinrichtung 40 ist vorzugsweise ferner in der Lage zweite sicherheitsbezogene Daten, das sind die besonderen sicherheitsbezogenen Daten, bereitzustellen und zur überlagerten Steuerungseinrichtung 20 zu übertragen, um eine zentrale Steuerung, insbesondere eine Schnellabschaltung des sicherheitskritischen Prozesses 70 zu ermöglichen.

Der sicherheitskritische Prozess 70 ist über E/A-Kanäle 60 und 62 mit einem sicheren Eingang und einem sicheren Ausgang der Signaleinheit 50 verbunden. In der Praxis kann die Signaleinheit 50 über den Kanal 62 mit einem Aktor (nicht dargestellt) und über den Kanal 60 mit einem Sensor (nicht dargestellt) verbunden sein. Der Sensor liefert Zustandsdaten des sicherheitsunkritischen Prozesses 70 über die Signaleinheit 50 an die überlagerte Steuereinrichtung 20 und/oder zur ersten sicheren Steuereinrichtung 40, während die Signaleinheit 50 die von der überlagerten Steuereinrichtung 20 kommenden besonderen sicherheitsbezogenen Daten und/oder die von der ersten Steuerungseinrichtung 40 bereitgestellten sicherheitsbezogenen Daten dem Aktor zuführen kann.

Die Signaleinheit 50 kann auch mehrere sichere Eingänge und Ausgänge aufweisen, die über E/A-Kanäle mit dem sicherheitskritischen Prozess 70 verbunden sind.

Angemerkt sei an dieser Stelle, dass die erste Steuereinrichtung 40, die Signaleinheit 50 und der sicherheitskritische Prozess 70 auch als Sicherheitsinsel bezeichnet werden können.

Die zweite sichere Steuereinrichtung 80 ist über eine Busschnittstelle 82 an den Feldbus 30 angeschlossen. Die Busschnittstelle 82 kann eine herkömmliche Interbus-basierte Busschnittstelle sein. Weiterhin weist die zweite Steuerungseinrichtung 80 eine sicherheitsbezogene Einrichtung 84 auf, die dazu ausgebildet ist, mit einer sicherheitsbezogenen Einrichtung 94 der Signaleinheit 90 in an sich bekannter Weise eine fehlersichere Kommunikation zu gewährleisten. Die Signaleinheit 90 weist wiederum eine Busschnittstelle 92 auf, über welche die Signaleinheit 90 mit der zweiten Steuereinrichtung 80, der übergelagerten Steuereinrichtung 20 und den übrigen Busteilnehmern kommunizieren kann.

Die zweite Steuerungseinrichtung 80 kann dazu ausgebildet sein, über den Feldbus 30 erste sicherheitsbezogene Daten für die Signaleinheit 90 bereitzustellen, um den sicherheitskritischen Prozess 110 zu steuern. Die sichere Steuerungseinrichtung 80 ist vorzugsweise ferner in der Lage, zweite sicherheitsbezogene Daten, das sind die besonderen sicherheitsbezogenen Daten, bereitzustellen und zur überlagerten Steuerungseinrichtung 20 zu übertragen, um eine zentrale Steuerung, insbesondere eine Schnellabschaltung des sicherheitskritischen Prozesses 110 zu ermöglichen.

Der sicherheitskritische Prozess 110 ist über E/A-Kanäle 100 und 102 mit einem sicheren Eingang und einem sicheren Ausgang der Signaleinheit 90 verbunden. In der Praxis kann die Signaleinheit 90 über den Kanal 102 mit einem Aktor (nicht dargestellt) und über den Kanal 100 mit einem Sensor (nicht dargestellt) verbunden sein. Der Sensor liefert Zustandsdaten des sicherheitsunkritischen Prozesses 110 über die Signaleinheit 90 zur überlagerten Steuereinrichtung 20 und/oder zur ersten sicheren Steuereinrichtung 80, während die Signaleinheit 90 die von der überlagerten Steuereinrichtung 20 kommenden besonderen sicherheitsbezogenen Daten und/oder die von der ersten Steuerungseinrichtung 80 bereitgestellten sicherheitsbezogenen Daten dem Aktor zuführen kann.

Die Signaleinheit 90 kann auch mehrere sichere Eingänge und Ausgänge aufweisen, die über E/A-Kanäle mit dem sicherheitskritischen Prozess 110 verbunden sind.

Angemerkt sei an dieser Stelle, dass die zweite Steuereinrichtung 80, die Signaleinheit 90 und der sicherheitskritische Prozess 11 auch als Sicherheitsinsel bezeichnet werden können.

Um sicherzustellen, dass die zweiten sicherheitsbezogenen Daten auch wirklich von der überlagerten Steuereinrichtung 20 kommen und korrekt weitergeleitet worden sind, kann die überlagerte Steuereinrichtung 20, d.h. vorzugsweise die sicherheitsbezogene Einrichtung 24 dazu ausgebildet sein, dynamische Daten zu erzeugen und diese zu den sicheren Steuereinrichtungen 40 und 80 und/oder direkt zu den Signaleinheiten 50 und 90 zu übertragen. Die sicheren Steuerungseinrichtungen 40 und 80 und/oder die Signaleinheiten 50 und 90 sind dann entsprechend ausgebildet, um zu erkennen, ob die dynamischen Daten definitionsgemäß erzeugt worden sind. Wenn nicht, veranlassen die Signaleinheiten 50 und 90, dass der sicherheitskritische Prozess 70 bzw. der sicherheitskritische Prozess 110 in einen sicheren Zustand geht. Denkbar ist auch, dass die Signaleinheiten 50 und 90 oder die sicheren Steuereinrichtungen 40 und 80 dynamische Daten erzeugen, diese zur überlagerten Steuereinrichtung 20 übertragen und anschließend die von der überlagerten Steuereinrichtung 20 geänderten dynamischen Daten auswerten und unter Ansprechen auf die geänderten dynamischen Daten definierte Schritte auslösen.

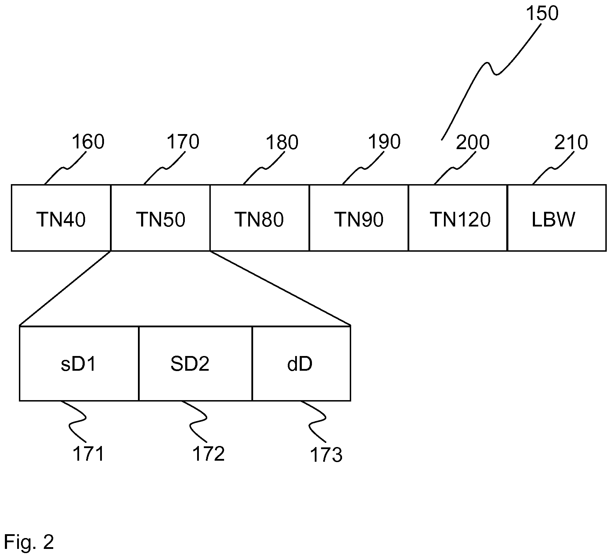

Nachfolgend wird die Funktionsweise des in Fig. 1 gezeigten Steuerungssystems 10 in Verbindung mit Fig. 2 näher erläutert.

Da es sich bei dem beispielhaften Feldbus 30, wie eingangs erwähnt, um den ringförmigen Interbus handelt, sind der Busmaster 22 und die Busschnittstellen 42, 52, 82, 92 und 122 dazu ausgebildet, eine bidirektionale Datenübertragung von Eingangs- und Ausgangsdaten aller Teilnehmer über sogenannte Summenrahmen zu ermöglichen. Ein beispielhafter Summenrahmen 150 mit einer erfindungsgemäßen Erweiterung ist in Fig. 2 dargestellt.

Gemäß dem Interbus-Kommunikationsprotokoll beginnt jeder vom Busmaster 22 auf den Feldbus 30 gelegte Summenrahmen mit einem Datenfeld 210, in welches ein Loopbackword LBW eingeschrieben ist. Dem Loopbackword folgen weitere Datenfelder 200 bis 160, die den am Feldbus 30 angeschlossenen Busteilnehmern entsprechend ihrer jeweiligen physikalischen Lage im Feldbus 30 eindeutig zugeordnet sind. Beim gezeigten Automatisierungssystem 10 ist das Datenfeld 200 dem Busteilnehmer 120, das Datenfeld 190 der Signaleinheit 90, das Datenfeld 180 der sicheren Steuerungseinrichtung 80, das Datenfeld 170 der Signaleinheit 50 und das Datenfeld 160 der sicheren Steuereinrichtung 40 zugeordnet.

Bei einer bevorzugten Ausführungsform, sind die den Signaleinheiten 50 und 90 zugeordneten Datenfelder 170 bzw. 190 jeweils in drei Teilfelder unterteilt. Lediglich das in drei Teilfelder 171, 172 und 173 unterteilte Datenfeld 170 ist in Fig. 2 detailliert dargestellt. Die sicherheitsgerichtete Einrichtung 44 der sicheren Steuereinrichtung 40 kann in das Teilfeld 171 erste sicherheitsbezogene Daten und in das Teilfeld 172 zweite sicherheitsbezogene Daten, die für die überlagerte Steuereinrichtung 20 bestimmt sind, einschreiben. In das Teilfeld 173 kann die sicherheitsgerichtete Einrichtung 44 der Steuereinrichtung 40 oder die sicherheitsgerichtete Einrichtung 54 der Signaleinheit 50 dynamische Daten einschreiben, die zur Auswertung und Verarbeitung ebenfalls an die überlagerte Steuereinrichtung 20 übertragen werden können.

In ähnlicher Weise kann die sicherheitsgerichtete Einrichtung 84 der zweiten Steuereinrichtung 80 in ein erstes Teilfeld des Datenfeldes 190 erste sicherheitsbezogene Daten und in ein zweites Teilfeld des Datenfeldes 190 zweite sicherheitsbezogene Daten, die für die überlagerte Steuereinrichtung 20 bestimmt sind, einschreiben. In ein drittes Teilfeld des Datenfeldes 190 kann die sicherheitsgerichtete Einrichtung 84 der Steuereinrichtung 80 oder die sicherheitsgerichtete Einrichtung 94 der Signaleinheit 90 dynamische Daten einschreiben, die zur Auswertung und Verarbeitung ebenfalls an die überlagerte Steuereinrichtung 20 übertragen werden können.

Die in den zweiten Teilfeldern der Datenfelder 170 und 190 übertragbaren besonderen sicherheitsbezogenen Daten enthalten vorzugsweise ein einziges Informationsbit, das gemäß einer vorteilhaften Implementierung von der sicheren Steuerungseinrichtung 40 bzw. 80 oder der Signaleinheit 50 bzw.90 auf Null gesetzt werden kann.

Angenommen sei nunmehr, dass das Automatisierungssystem 20 ordnungsgemäß arbeitet und keine Fehler aufgetreten sind.

Demzufolge müssen die sicheren Steuereinrichtungen 40 und 80 keine Sicherheitsfunktionen über die Signaleinheiten 50 bzw. 90 auslösen. Die sicherheitsbezogene Einrichtung 44 der ersten Steuereinrichtung 40 schreibt in diesem Fall eine Null in das für die Signaleinheit 50 bestimmte Teilfeld 172 und als dynamisches Datum zum Beispiel eine vorbestimmte Zahl in das Teilfeld 173, während die sicherheitsbezogene Einrichtung 84 der sicheren Steuereinrichtung 80 eine Null in das zweite Teilfeld des für die Signaleinheit 90 bestimmten Datenfeldes 190 und ebenfalls eine vorbestimmte Zahl in das dritte Teilfeld des Datenfeldes 190 schreibt.

In an sich bekannter Weise können zudem alle am Feldbus 30 angeschlossenen Teilnehmer Ausgangsdaten von anderen Teilnehmern empfangen und Eingangsdaten in die ihnen zugeordneten Datenfelder schreiben und zur überlagerten Steuereinrichtung 20 oder an andere am Feldbus 30 angeschlossene Teilnehmer übertragen. Die überlagerte Steuereinrichtung 20 bzw. deren sicherheitsbezogene Einrichtung 24 ist dazu ausgebildet, die zweiten und dritten Datenfelder der Datenfelder 170 und 190 auszuwerten, gezielt, d.h. insbesondere in definierter Weise zu verändern und mit dem nächsten Summenrahmen zu den Signaleinheiten 50 und 90 zu übertragen. Je nach Implementierung ersetzt die sicherheitsbezogene Einrichtung 24 der überlagerten Steuereinrichtung 20 beispielsweise die in den zweiten Teilfeldern der Datenfelder 170 und 190 übertragene Null durch eine Eins, während die in den dritten Teilfeldern der Datenfelder 170 und 190 übertragene vorbestimmte Zahl zum Beispiel um den Wert 1 inkrementiert wird.

Die sicherheitsbezogenen Einrichtungen 54 und 94 der jeweiligen Signaleinheiten lesen die ihnen zugeordneten zweiten und dritten Teilfelder der Datenfelder 170 bzw. 190 aus und erkennen anhand der im dritten Teilfeld enthaltenen veränderten Zahl, dass die im jeweiligen zweiten Teilfeld enthaltenen zweiten sicherheitsbezogenen Daten von der überlagerten Steuereinrichtung 20 kommen und korrekt übermittelt wurden. Unter Ansprechen auf die im jeweiligen zweiten Teilfeld enthaltene Eins erkennt die Signaleinheit 50 bzw. 90, dass die sicherheitskritischen Prozesse 70 und 110 weiterlaufen sollen.

Nunmehr sei angenommen, dass der überlagerten Steuereinrichtung 20 vom Automatisierungssystem 10 oder einer Bedienperson mitgeteilt worden ist, dass die sicherheitskritischen Prozesse 70 und 110 sofort abgeschaltet werden müssen. In diesem Fall sorgt die sicherheitsbezogene Einrichtung 24 dafür, dass in die zweiten Teilfelder der Datenfelder 170 und 190 des nächsten Summenrahmens jeweils eine Null geschrieben wird und die im dritten Teilfeld enthaltenen dynamischen Daten in vorbestimmter Weise geändert werden.

Die sicherheitsbezogenen Einrichtungen 54 und 94 der Signaleinheiten 50 bzw. 90 lesen die ihnen zugeordneten zweiten und dritten Teilfelder der Datenfelder 170 bzw. 190 aus und erkennen anhand der im dritten Teilfeld enthaltenen veränderten Zahl, dass die im jeweiligen zweiten Teilfeld enthaltenen besonderen sicherheitsbezogenen Daten von der überlagerten Steuereinrichtung 20 kommen und korrekt übermittelt wurden. Unter Ansprechen auf die im jeweiligen zweiten Teilfeld enthaltene Null erkennt die Signaleinheit 50 bzw. 90, dass die sicherheitskritischen Prozesse 70 und 110 sofort abgeschaltet werden müssen. Deshalb werden die entsprechenden sicheren Ausgänge der Signaleinheiten 50 und 90 darauf hin sofort auf Null gesetzt und die sicherheitskritischen Prozesse 70 und 110 abgeschaltet. Auf diese Weise werden die dezentralen sicherheitskritischen Prozesse 70 und 110 zentral überwacht und gesteuert. Das bedeutet, dass die überlagerte Steuereinrichtung 20 immer ein Auge auf die sicheren Steuereinrichtungen 40 und 80 wirft. Die sicheren Steuereinrichtungen 40 und 80 können deshalb nicht mehr unabhängig von der überlagerten Steuereinrichtung 20 in die sicherheitskritischen Prozesse eingreifen.

Denkbar ist, dass die sicherheitsbezogene Einrichtung 24 der überlagerten Steuereinrichtung 20 dynamische Daten erzeugt und in den jeweils dritten Teilfeldern der Datenfelder 170 und 190 einschreibt, die für die erste Steuereinrichtung 40 und zweite Steuereinrichtung 80 bestimmt sind.

An dieser Stelle sei angemerkt, dass die überlagerte Steuereinrichtung 20 dazu ausgebildet sein kann, in jedem Kommunikationszyklus die in den zweiten Teilfelder der Datenfelder 170 und 190 übertragenen zweiten sicherheitsbezogenen Daten gezielt zu verändern, um zu verhindern, dass eine unerwünschte Schnellabschaltung der sicherheitskritischen Prozesse 70 und 110 erfolgt.

Denkbar ist, dass Informationsquellen, das sind beispielsweise die sicheren Steuerungseinrichtungen 40 und 80 und/oder die Signaleinheiten 50 und 90 in einen Quasi-Sicherheitszustand gehen, in welchem sie den sicherheitskritischen Prozesse 70 bzw. den sicherheitskritischen Prozesse 110 laufen lassen. Die sicherheitskritischen Prozesse 70 und 110 senden dann ihrerseits an die sichere Steuereinrichtung 40 bzw. 80 eine Information, dass eine Schnellabschaltung angefordert wurde. Die sicheren Steuereinrichtung 40 und 80 oder die jeweiligen Signaleinheiten 50 und 90 müssen dann die ihnen zugeordneten Informationen, die die Schnellabschaltinformation enthält, in dem zweiten Teilfeld des Datenfeldes 170 bzw. 180 zurücksetzen. Der Quasi-Sicherheitszustand kann solange aufrecht erhalten werden, bis eine eingestellte maximale Reaktionszeit auf den Steuerungseinrichtungen 40 und 80 oder den Signaleinheiten 50 und 90 abgelaufen ist. In diesem Fall wechselt die Steuereinrichtung 40 bzw. 80 von dem Quasi-Sicherheitszustand in den Sicherheitszustand.

Auf diese Weise ist eine schnelle Abschaltung einzelner sicherer Komponenten oder Gruppen von sicheren Komponenten möglich, ohne dass eine aufwendige Programmierung auf den dezentralen Steuereinrichtungen 40 und 80 vorgesehen werden muss.

Anstelle von Schnellabschaltinformationen, die in die zweiten Teilfelder der Datenfelder 170 und 190 eines jeden Summenrahmen eingeschrieben werden, könnte von der überlagerten Steuerung 20 auch zyklisch eine zentrale Broadcast-Information abgesetzt werden, die die Schnellabschaltinformation enthält. Die sicheren Steuereinrichtungen 40 und 80 und/oder die Signaleinheiten 50 und 90 werten diese Informationen dann aus.

Die sicheren Steuereinrichtungen 40 und 80 und/oder die Signaleinheiten 50 und 90 können ferner dazu ausgebildet sein, eine ausgelöste Schnellabschaltung im nächsten Summenrahmen zu bestätigen, was zu einer weiteren Erhöhung der Sicherheit führen kann.

Ein Aspekt der Erfindung kann darin gesehen werden, dass eine Informationsquelle, beispielsweise eine sichere Signaleinheit neben ersten sicherheitsbezogenen Daten auch zweite sicherheitsbezogene Daten zur Schnellabschaltung einzelner sicherheitsrelevanter Inseln zufügt. Die zweiten sicherheitsbezogenen Daten gelangen zu einer überlagerten Steuerung, die diese Daten auswertet und gezielt ändert. Vorzugsweise enthalten die zweiten sicherheitsbezogenen Daten ein Informationsbit, welches standardgemäß von der Signaleinheit auf Null gesetzt wird. In der überlagerten Steuerungseinrichtung wird das empfangene Informationsbit auf Eins gesetzt und dann zu einem bestimmten sicheren Ausgang, der auch als Informationssenke bezeichnet werden kann, übertragen. Die Informationssenke wertet in an sich bekannter Weise die ersten sicherheitsbezogenen Daten aus. Zusätzlich überprüft sie die zugeordneten zweiten sicherheitsbezogenen Informationen und setzt gegebenenfalls alle oder einzelne sichere Ausgänge auf Null, sodass der jeweilige sicherheitskritische Prozesse mittels einer zentralen Steuerung in einen sicheren Zustand geführt werden kann.

## Patentansprüche

1. Steuerungs- und Datenübertragungssystem (10) zum Übertragen von sicherheitsbezogenen Daten über einen Feldbus (30) mit
- einer ersten, sicheren Steuereinrichtung (40) zum Steuern eines sicherheitskritischen Prozesses (70),
- wenigstens einer Signaleinheit (50), die über E/A-Kanäle (60, 62) mit dem sicherheitskritischen Prozess (70) verknüpft ist,
- einem Feldbus (30), und
- einer überlagerten Steuereinrichtung (20), die einen Busmaster (22) zum Steuern der Kommunikation auf dem Feldbus (30) aufweist und dazu ausgebildet ist, einen sicherheitsunkritischen Prozess (140) zu steuern, wobei die erste Steuereinrichtung (40) und die wenigstens eine Signaleinheit (50) jeweils sicherheitsbezogene Einrichtungen (44; 54) aufweisen, um eine fehlersichere Kommunikation miteinander zu gewährleisten, wobei die überlagerte Steuereinrichtung (20), die erste Steuereinrichtung (40) und die wenigstens eine Signaleinheit (50) über den Feldbus (30) verbunden und jeweils körperlich getrennt an dem Feldbus (30) angeschlossen sind,
wobei die erste, sichere Steuereinrichtung (40, 44) dazu ausgebildet ist, erste sicherheitsbezogene Daten für die Signaleinheit (50) bereitzustellen, um den sicherheitskritischen Prozess (70) zu steuern, und zweite sicherheitsbezogene Daten bereitzustellen und die zweiten sicherheitsbezogenen Daten zur überlagerten Steuereinrichtung (20) zu übertragen, und dass die überlagerte Steuereinrichtung (20, 24) dazu ausgebildet ist, die zweiten sicherheitsbezogenen Daten auszuwerten, zu verändern und zu der wenigstens einen Signaleinheit (50) oder zur ersten Steuereinrichtung (40) zu übertragen, um den sicherheitskritischen Prozess (70) zentral steuern zu können, **dadurch gekennzeichnet dass** die erste sichere Steuereinrichtung (40, 44) dazu ausgebildet ist, im fehlerfreien Betrieb des Steuerungs- und Datenübertragungssystems definierte zweite sicherheitsbezogene Daten zur überlagerten Steuereinrichtung (20, 24) zu übertragen und dass die überlagerte Steuereinrichtung (20) dazu ausgebildet ist, die im fehlerfreien Betrieb empfangenen definierten zweiten sicherheitsbezogenen Daten gezielt zu verändern, um sicherzustellen, dass keine unerwünschte Schnellabschaltung des sicherheitskritischen Prozesses (70) erfolgt.

2. Steuerungs- und Datenübertragungssystem (10) nach Anspruch 1,
**gekennzeichnet durch**
eine zweite, sichere Steuereinrichtung (80) zum Steuern eines weiteren sicherheitskritischen Prozesses (110), wenigstens eine weitere Signaleinheit (90), die über E/A-Kanäle (100, 102) mit dem weiteren sicherheitskritischen Prozess (110) verknüpft ist, wobei die zweite sichere Steuereinheit (80) und die Signaleinheit (50) über den Feldbus (30) verbunden sind, wobei
die zweite Steuereinrichtung (80) und die wenigstens eine weitere Signaleinheit (90) jeweils sicherheitsbezogene Einrichtungen (84; 94) aufweisen, um eine fehlersichere Kommunikation miteinander zu gewährleisten, wobei die überlagerte Steuereinrichtung (20) getrennt von der zweiten Steuereinrichtung (80) und der wenigstens einen weiteren Signaleinheit (90) an den Feldbus (30) angeschlossen ist, wobei die zweite, sichere Steuereinrichtung (80, 84) dazu ausgebildet ist, dritte sicherheitsbezogene Daten für die Signaleinheit (90) bereitzustellen, um den sicherheitskritischen Prozess (110) zu steuern, und vierte sicherheitsbezogene Daten bereitzustellen und die vierten sicherheitsbezogenen Daten zur überlagerten Steuereinrichtung (20, 24) zu übertragen, wobei die überlagerte Steuereinrichtung (20, 24) dazu ausgebildet ist, die empfangenen vierten sicherheitsbezogenen Daten auszuwerten, zu verändern und zu der wenigstens einen weiteren Signaleinheit (90) oder zur zweiten Steuereinrichtung (80) zu übertragen, um den weiteren sicherheitskritischen Prozess (110) zentral steuern zu können, wobei
die zweite sichere Steuereinrichtung (80) dazu ausgebildet ist, im fehlerfreien Betrieb des Steuerungs- und Datenübertragungssystems definierte vierte sicherheitsbezogene Daten zur überlagerten Steuereinrichtung (20, 24) zu übertragen und dass die überlagerte Steuereinrichtung (20) dazu ausgebildet ist, die im fehlerfreien Betrieb empfangenen definierten vierten sicherheitsbezogenen Daten gezielt zu verändern, um sicherzustellen, dass keine unerwünschte Schnellabschaltung des sicherheitskritischen Prozesses (110) erfolgt.

3. Steuerungs- und Datenübertragungssystem (10) nach Anspruch 1 oder 2,
**dadurch gekennzeichnet, dass**
die zweiten sicherheitsbezogenen Daten einen Befehl zur Schnellabschaltung eines sicherheitskritischen Prozesses (70, 110) enthalten.

4. Steuerungs- und Datenübertragungssystem (10) nach einem der Ansprüche 1 bis 3,
**dadurch gekennzeichnet, dass**
die überlagerte Steuereinrichtung (20, 24) dazu ausgebildet ist, dynamische Daten zu erzeugen und zu der wenigstens einen Signaleinheit (50) und/oder der wenigstens einen weiteren Signaleinheit (90) zu übertragen, und dass
die wenigstens eine Signaleinheit (50) und/oder die wenigstens eine weitere Signaleinheit (90) dazu ausgebildet sind, die dynamischen Daten auszuwerten.

5. Steuerungs- und Datenübertragungssystem (10) nach einem der Ansprüche 1 bis 3,
**dadurch gekennzeichnet, dass**
die erste und/oder zweite Steuereinrichtung (40; 80) oder die wenigstens eine Signaleinheit (50 und/oder die wenigstens eine weitere Signaleinheit (90) dazu ausgebildet sind, dynamische Daten zu erzeugen und zur überlagerten Steuereinrichtung (20) zu übertragen, und dass
die überlagerte Steuereinrichtung (20, 24) dazu ausgebildet ist, die empfangenen dynamischen Daten gezielt zu verändern und zu der ersten und/oder zweiten Steuereinrichtung (40, 80) oder zu der wenigstens einen Signaleinheit (50) und/oder zu der wenigstens einen weiteren Signaleinheit zu übertragen.

6. Steuerungs- und Datenübertragungssystem (10) nach einem der vorstehenden Ansprüche,
**dadurch gekennzeichnet, dass**
eine Übertragung der ersten sicherheitsbezogenen Daten, der zweiten sicherheitsbezogenen Daten und gegebenenfalls der dynamischen Daten zyklisch in Summenrahmen über den Feldbus (30) erfolgt.

## Claims

1. A control and data transmission system (10) for transmitting safety-related data via a fieldbus (30), comprising
- a first safe control device (40) for controlling a safety-critical process (70);
- at least one signal unit (50) which is linked to the safety-critical process (70) via I/O channels (60, 62) ;
- a fieldbus (30); and
- a higher-level control device (20) including a bus master (22) for controlling the communication on the field bus (30) and being adapted to control a safety- non-critical process (140), wherein the first control device (40) and the at least one signal unit (50) each include safety-related devices (44; 54) to ensure fail-safe communication with each other, wherein the higher-level control device (20), the first control device (40) and the at least one signal unit (50) are connected to each other via the fieldbus (30) and are each connected to the fieldbus (30) in physically separated manner; wherein the first safe control device (40, 44) is adapted to provide first safety-related data to the signal unit (50) to control the safety-critical process (70), and to provide second safety-related data and transmit the second safety-related data to the higher-level control device (20); and
wherein the higher-level control device (20, 24) is adapted to evaluate, modify and transmit to the at least one signal unit (50) or to the first control device (40) the second safety-related data, in order to be able to centrally control the safety-critical process (70);
**characterized in that**
the first safe control device (40, 44) is adapted to transmit, during error-free operation of the control and data transmission system, defined second safety-related data to the higher-level control device (20, 24); and that
the higher-level control device (20) is adapted to selectively modify the defined second safety-related data received during error-free operation in order to ensure that there will be no undesired rapid shutdown of the safety-critical process (70).

2. The control and data transmission system (10) according to claim 1, **characterized by**
a second safe control device (80) for controlling a further safety-critical process (110);
at least one further signal unit (90) which is linked to the further safety-critical process (110) via I/O channels (100, 102);
wherein the second safe control device (80) and the signal unit (50) are connected via the field bus (30); wherein the second control device (80) and the at least one further signal unit (90) each include safety-related devices (84; 94) in order to ensure fail-safe communication with each other;
wherein the higher-level control device (20) is connected to the fieldbus (30) separately from the second control device (80) and the at least one further signal unit (90);
wherein the second safe control device (80, 84) is adapted to provide third safety-related data to the signal unit (90) for controlling the safety-critical process (110), and to provide fourth safety-related data and transmit the fourth safety-related data to the higher-level control device (20, 24);
wherein the higher-level control device (20, 24) is adapted to evaluate, modify and transmit to the at least one further signal unit (90) or to the second control device (80) the fourth safety-related data, in order to be able to centrally control the further safety-critical process (110); wherein
the second safe control device (80) is adapted to transmit, during error-free operation of the control and data transmission system, defined fourth safety-related data to the higher-level control device (20, 24); and wherein the higher-level control device (20) is adapted to selectively modify the defined fourth safety-related data received during error-free operation in order to ensure that there will be no undesired rapid shutdown of the safety-critical process (110).

3. The control and data transmission system (10) according to claim 1 or 2, **characterized in that**
the second safety-related data include a command for rapid shutdown of a safety-critical process (70, 110).

4. The control and data transmission system (10) according to any one of claims 1 to 3, **characterized in that**
the higher-level control device (20, 24) is adapted to generate dynamic data and transmit them to the at least one signal unit (50) and/or to the at least one further signal unit (90); and that
the at least one signal unit (50) and/or the at least one further signal unit (90) are adapted to evaluate said dynamic data.

5. The control and data transmission system (10) according to any one of claims 1 to 3, **characterized in that**
the first and/or second control device (40; 80) or the at least one signal unit (50) and/or the at least one further signal unit (90) are adapted to generate dynamic data and transmit them to the higher-level control device (20); and that
the higher-level control device (20, 24) is adapted to selectively modify the received dynamic data and to transmit them to the first and/or second control device (40, 80) or to the at least one signal unit (50) and/or to the at least one further signal unit.

6. The control and data transmission system (10) according to any one of the preceding claims,
**characterized in that**
a transmission of the first safety-related data, the second safety-related data and optionally of the dynamic data occurs cyclically within summation frames via the fieldbus (30).

## Revendications

1. Système de commande et de transmission de données (10) pour transmettre des données relatives à la sécurité via un bus de terrain (30) avec
- un premier dispositif de commande (40) sécurisé pour commander un processus critique pour la sécurité (70),
- au moins une unité de signal (50) qui est reliée via des canaux E/S (60, 62) au processus critique pour la sécurité (70),
- un bus de terrain (30), et
- un dispositif de commande superposé (20) qui présente un maître de bus (22) pour commander la communication sur le bus de terrain (30) et est conçu pour commander un processus non critique pour la sécurité (140), où le premier dispositif de commande (40) et l'au moins une unité de signal (50) présentent respectivement des dispositifs relatifs à la sécurité (44 ; 54) pour garantir une communication réciproque exempte d'erreur, où le dispositif de commande superposé (20), le premier dispositif de commande (40) et l'au moins une unité de signal (50) sont liés via le bus de terrain (30) et respectivement raccordés au bus de terrain (30) en étant physiquement séparés,
dans lequel le premier dispositif de commande (40, 44) sécurisé est conçu pour mettre à disposition des premières données relatives à la sécurité pour l'unité de signal (50) pour commander le processus critique pour la sécurité (70), et mettre à disposition des deuxièmes données relatives à la sécurité et transmettre les deuxièmes données relatives à la sécurité au dispositif de commande superposé (20), et en ce que le dispositif de commande superposé (20, 24) est conçu pour exploiter, modifier les deuxièmes données relatives à la sécurité et pour les transmettre à l'au moins une unité de signal (50) ou au premier dispositif de commande (40), pour pouvoir commander le processus critique pour la sécurité (70) de façon centralisée, **caractérisé en ce que** le premier dispositif de commande (40, 44) sécurisé est conçu pour transmettre des deuxièmes données relatives à la sécurité définies au dispositif de commande superposé (20, 24) dans le fonctionnement exempt d'erreur du système de commande et de transmission de données et **en ce que** le dispositif de commande superposé (20) est conçu pour modifier de façon ciblée les deuxièmes données relatives à la sécurité définies réceptionnées dans le fonctionnement exempt d'erreur, pour assurer qu'aucune déconnexion rapide indésirable du processus critique pour la sécurité (70) ne se produise.

2. Système de commande et de transmission de données (10) selon la revendication 1, **caractérisé par** :
un second dispositif de commande (80) sécurisé pour commander un autre processus critique pour la sécurité (110), au moins une autre unité de signal (90) qui est reliée via des canaux E/S (100, 102) à l'autre processus critique pour la sécurité (110),
la seconde unité de commande (80) sécurisée et l'unité de signal (50) étant liées via le bus de terrain (30),
dans lequel
le second dispositif de commande (80) et l'au moins une autre unité de signal (90) présentent respectivement des dispositifs relatifs à la sécurité (84 ; 94) pour garantir une communication réciproque exempte d'erreur, où le dispositif de commande superposé (20) est raccordé au bus de terrain (30) séparément du second dispositif de commande (80) et de l'au moins une autre unité de signal (90), où le second dispositif de commande (80, 84) sécurisé est conçu pour mettre à disposition des troisièmes données relatives à la sécurité pour l'unité de signal (90) pour commander le processus critique pour la sécurité (110), et mettre à disposition des quatrièmes données relatives à la sécurité et transmettre les quatrièmes données relatives à la sécurité au dispositif de commande superposé (20, 24), où le dispositif de commande superposé (20, 24) est conçu pour exploiter, modifier les quatrièmes données relatives à la sécurité réceptionnées et pour les transmettre à l'au moins une autre unité de signal (90) ou au second dispositif de commande (80), pour pouvoir commander l'autre processus critique pour la sécurité (110) de façon centralisée, dans lequel
le second dispositif de commande (80) sécurisé est conçu pour transmettre des quatrièmes données relatives à la sécurité définies au dispositif de commande superposé (20, 24) dans le fonctionnement exempt d'erreur du système de commande et de transmission de données et en ce que le dispositif de commande superposé (20) est conçu pour modifier de façon ciblée les quatrièmes données relatives à la sécurité définies réceptionnées dans le fonctionnement exempt d'erreur, pour assurer qu'aucune déconnexion rapide indésirable du processus critique pour la sécurité (110) ne se produise.

3. Système de commande et de transmission de données (10) selon la revendication 1 ou 2, **caractérisé en ce que** les deuxièmes données relatives à la sécurité contiennent une instruction pour la déconnexion rapide d'un processus critique pour la sécurité (70, 110).

4. Système de commande et de transmission de données (10) selon l'une des revendications 1 à 3, **caractérisé en ce que** :
le dispositif de commande superposé (20, 24) est conçu pour produire des données dynamiques et pour les transmettre à l'au moins une unité de signal (50) et/ou à l'au moins une autre unité de signal (90), et **en ce que**
l'au moins une unité de signal (50) et/ou l'au moins une autre unité de signal (90) sont conçues pour exploiter les données dynamiques.

5. Système de commande et de transmission de données (10) selon l'une des revendications 1 à 3, **caractérisé en ce que** :
le premier et/ou le second dispositif de commande (40 ; 80) ou l'au moins une unité de signal (50 et/ou l'au moins une autre unité de signal (90) sont conçus pour produire des données dynamiques et pour les transmettre au dispositif de commande superposé (20), et **en ce que**
le dispositif de commande superposé (20, 24) est conçu pour modifier de façon ciblée les données dynamiques réceptionnées et pour les transmettre au premier et/ou second dispositif de commande (40, 80) ou à l'au moins une unité de signal (50) et/ou à l'au moins une autre unité de signal.

6. Système de commande et de transmission de données (10) selon l'une des revendications précédentes, **caractérisé en ce qu'**une transmission des premières données relatives à la sécurité, des deuxièmes données relatives à la sécurité et le cas échéant des données dynamiques se produit de façon cyclique dans des trames de somme via le bus de terrain (30).
